# EUROPÄISCHE PATENTSCHRIFT

(11) **EP 2 485 347 B1**
(45) Veröffentlichungstag und Bekanntmachung des Hinweises auf die Patenterteilung: **09.03.2016**
(21) Anmeldenummer: 11189583.5
(22) Anmeldetag: 17.11.2011
(51) Int. Cl.: H02B 1/052

(54) **Vorrichtung zur Positionierung wenigstens eines Rundsteckers**
Device for positioning at least one circular connector
Dispositif de positionnement d'au moins un connecteur annulaire

(30) Priorität: 17.11.2010 DE 202010015763 U
(43) Veröffentlichungstag der Anmeldung: 08.08.2012
(73) Patentinhaber: LQ Mechatronik-Systeme GmbH, 71691 Freiberg am Neckar (DE)
(72) Erfinder: Quero, José, 74321 Bietigheim-Bissingen (DE); Lentmeier, Steffen, 71723 Großbottwar (DE); Wenzel, Mike, 74076 Heilbronn (DE)
(74) Vertreter: Patentanwälte Ruff, Wilhelm, Beier, Dauster & Partner mbB

(56) Entgegenhaltungen:
- EP-A1- 1 213 805
- EP-A2- 0 457 254
- DE-C1- 19 716 917

## Beschreibung

Die Erfindung betrifft eine Vorrichtung zur Positionierung wenigstens eines mehrpoligen Rundsteckers auf einem insbesondere hutförmigen Trägerprofil, das zur Halterung von insbesondere elektromechanischen Funktionsmodulen vorgesehen ist.

Aus der DE 197 43 974 A1 ist ein Schaltschrank bekannt, der mehrere auf einer Tragschiene befestigte Funktionsmodule umfasst. Die Tragschiene ist als hutförmiges Trägerprofil ausgeführt, auf der elektrische und elektronische Funktionsmodule aufgerastet werden können.

Aus der DE19716917 ist eine Steckermontageeinheit zur Montage von Kontakteinsätgen auf einer Tragschiene bekannt.

Bei praktischen Ausführungsformen eines derartigen Schaltschrankes werden zudem mehrpolige Rundstecker benötigt, um Energieversorgungs- und Datenanschlüsse zu verwirklichen.

Aufgabe der Erfindung ist es, eine Vorrichtung der eingangs genannten Art zu schaffen, die eine einfache und platzsparende Positionierung mehrpoliger Rundstecker an einem Trägerprofil zur Halterung von Funktionsmodulen ermöglicht.

Diese Aufgabe wird dadurch gelöst, dass ein Adapter mit mehreren, außenseitigen Funktionsflächen vorgesehen ist, wobei eine erste Funktionsfläche mit Rastprofilierungen zur Verrastung des Adapters mit dem Trägerprofil versehen ist, wobei mehrere weitere, zu der ersten Funktionsfläche versetzte Funktionsfläche mit Haltemitteln zum lösbaren Befestigen eines Gehäuses eines Rundsteckers versehen ist, und wobei der Adapter wenigstens einen zu den mehreren außenseitigen Funktionsflächen hin offenen Hohlraum für eine Durchführung flexibler Leitungen umfasst. Der erfindungsgemäße Adapter ermöglicht eine sichere Positionierung mehrerer mehrpoliger Rundstecker an einem Trägerprofil. Zudem ist eine sichere Befestigung eines Gehäuses des Rundsteckers an dem Adapter gewährleistet. Schließlich ist ein platzsparende Leitungsverlegung ermöglicht, indem der Adapter offene Bereiche für eine Leitungsdurchführung aufweist. Als flexible Leitungen sind insbesondere mehrlitzige Kabel vorgesehen. Die erfindungsgemäße Lösung eignet sich in besonders vorteilhafter Weise für einen Schaltschrankeinsatz bei Anlagen und Maschinen. Das Trägerprofil ist vorzugsweise eine aus Schaltschrankanordnungen grundsätzlich bekannte Hutschiene, auf der elektrische, elektronische und elektromechanische Funktionsmodule wie Netzteile, Leistungsschalter, Ein-/Ausgabemodule, Sicherungen und Transformatoren oder ähnliche Funktionsmodule aufgerastet sind.

In Ausgestaltung der Erfindung ist der Adapter als einstückiges Kunststoffbauteil gestaltet. Dies ermöglicht eine einfache und kostengünstige Herstellung. Durch die Gestaltung als einstückiges Kunststoffbauteil ist der Adapter einfach handhabbar.

In weiterer Ausgestaltung der Erfindung ist der Adapter rahmenförmig mit mehreren, zu einem mehreckigen Körper verbundenen Rahmenprofilabschnitten gestaltet, die Kanten- und Eckbereiche des Adapters bilden. Die rahmenförmige Gestaltung des Adapters ermöglicht zum einen eine Leichtbauweise. Zum anderen gewährleistet die rahmenförmige Bauweise direkt die Schaffung eines offenen Hohlraumes. In besonders vorteilhafter Weise sind die Rahmenprofilabschnitte durch zwei von einer Grundfläche nach oben abragende Rahmenschenkel gebildet, die zwischen sich den Hohlraum begrenzen. Die Rahmenprofilabschnitte sind wie auch die Grundfläche mit geeigneten Versteifungsstrukturen wie Versteifungsrippen oder ähnlichem versehen.

In weiterer Ausgestaltung der Erfindung schließen die mit Haltemitteln zur Rundsteckergehäusebefestigung versehenen Funktionsflächen in einer gemeinsamen Umfangsrichtung aneinander und/oder an die mit den Rastprofilierungen versehene erste Funktionsfläche an. Ausgehend von der als Grundfläche dienenden ersten Funktionsfläche, die mit den Rastprofilierungen versehen ist, erstrecken sich die weiteren Funktionsflächen in einer Umfangsrichtung quer zur Ausrichtung eines Trägerprofils, auf dem der Adapter mit seiner Grundfläche verrastbar ist.

In weiterer Ausgestaltung der Erfindung sind die mit den Haltemitteln versehenen Funktionsflächen zur flächigen Auflage von Befestigungsabschnitten jedes Rundsteckergehäuses eben gestaltet. Die ebene Gestaltung der Funktionsflächen ermöglicht eine sichere und positionsfeste Auflage entsprechender Befestigungsabschnitte wie insbesondere Befestigungsflanschen des jeweiligen Rundsteckergehäuses.

In weiterer Ausgestaltung der Erfindung sind die Haltemittel als in den Rahmenprofilabschnitten vorgesehene Aufnahmelöcher gestaltet. In diese können Befestigungsschrauben eingeschraubt werden, die in den Befestigungsabschnitten des jeweiligen Rundsteckergehäuses gehalten sind.

In weiterer Ausgestaltung der Erfindung sind mehrere Aufnahmelöcher einer Funktionsfläche komplementär zu Schraublöchern der Befestigungsabschnitte von Rundsteckergehäusen unterschiedlicher Größe angeordnet. Dadurch ist es möglich, auf einer Funktionsfläche des Adapters alternativ Rundsteckergehäuse unterschiedlicher Größe zu montieren, ohne dass zusätzliche Befestigungsbohrungen oder ähnliches geschaffen werden müssen. Der Adapter kann demzufolge für die Befestigung verschiedener Rundstecker vorgesehen sein, ohne jeweils individuell an diese unterschiedlichen Rundstecker angepasst werden zu müssen.

In weiterer Ausgestaltung der Erfindung sind die mit den Haltemitteln versehenen Funktionsflächen in Winkeln aus einem Bereich von 90° bis 180°, insbesondere 90° und 180° oder 135°, relativ zu der ersten, mit den Rastprofilierungen versehenen Funktionsfläche ausgerichtet. Bei einem Adapter, der die Funktionsfläche mit einer Ausrichtung von 90° und 180° aufweist, ist es möglich, zwei Rundstecker an dem Adapter zu positionieren.

In weiterer Ausgestaltung der Erfindung umfassen die an der ersten Funktionsfläche vorgesehenen Rastprofilierungen wenigstens eine formsteife Sicherungsnase sowie wenigstens eine elastisch nachgiebige Rastnase auf einer der Sicherungsnase gegenüberliegenden Seite. Der Adapter wird mit seiner Grundfläche vorzugsweise zunächst über die formsteife Sicherungsnase an einem entsprechenden Hutschenkel eines hutförmigen Trägerprofils eingehängt und anschließend mit der wenigstens einen gegenüberliegenden, elastisch nachgiebigen Rastnase an dem gegenüberliegenden Hutschenkel des Trägerprofils eingerastet. Hierdurch ist eine werkzeuglose Montage oder Demontage des Adapters auf dem Trägerprofil, insbesondere auf einer Hutschiene, ermöglicht.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung eine Ausführungsform zur Positionierung eines Rundsteckers auf einer Hutschiene, nicht Teil der Erfindung
- Fig. 2: einen Adapter gemäß Fig. 1 zur Positionierung eines größeren Rundsteckers relativ zu der Hutschiene,
- Fig. 3: eine Ausführungsform der Erfindung mit einem Adapter, der zwei Funktionsflächen zur Befestigung jeweils eines Rundsteckers aufweist,
- Fig. 4: den Adapter nach Fig. 3, an dem kleinere Rundstecker befestigt sind,
- Fig. 5: eine Frontansicht des Adapters nach den Fig. 1 und 2,
- Fig. 6: eine Seitenansicht des Adapters nach Fig. 5,
- Fig. 7: eine Draufsicht auf den Adapter nach den Fig. 5 und 6,
- Fig. 8: eine perspektivische Darstellung des Adapters nach den Fig. 5 bis 7,
- Fig. 9: eine Frontansicht des Adapters nach den Fig. 3 und 4,
- Fig. 10: eine Seitenansicht des Adapters nach Fig. 9,
- Fig. 11: eine Draufsicht auf den Adapter nach den Fig. 9 und 10 und
- Fig. 12: eine perspektivische Darstellung des Adapters nach den Fig. 9 bis 11.

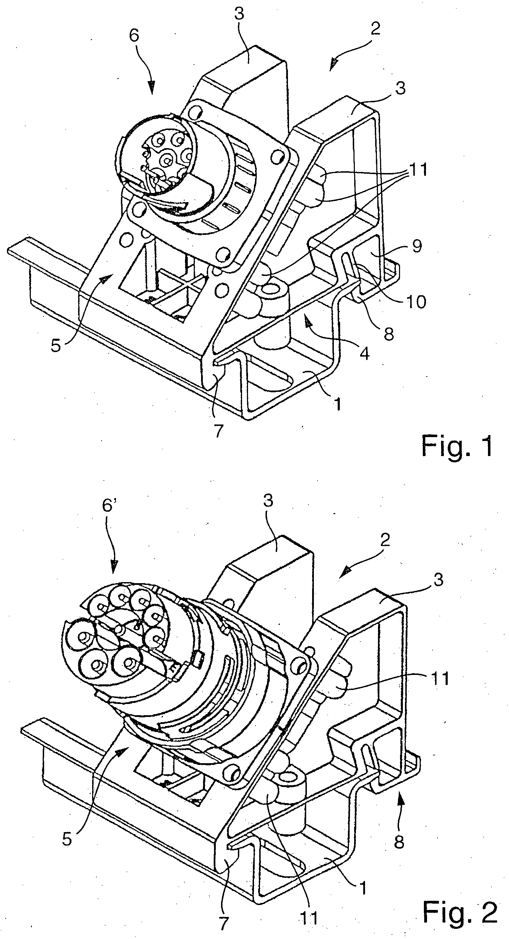

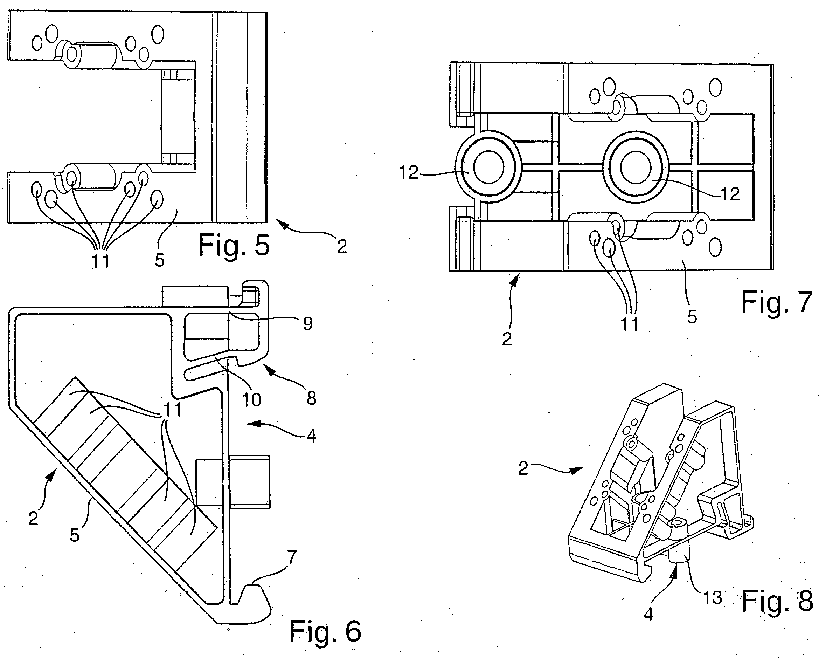

In den Fig. 1 und 2, 5 bis 8, ist eine Vorrichtung zur Positionierung nur eines Rundsteckers auf einer Hutschiene, nicht Teil der Erfindung, gezeigt.

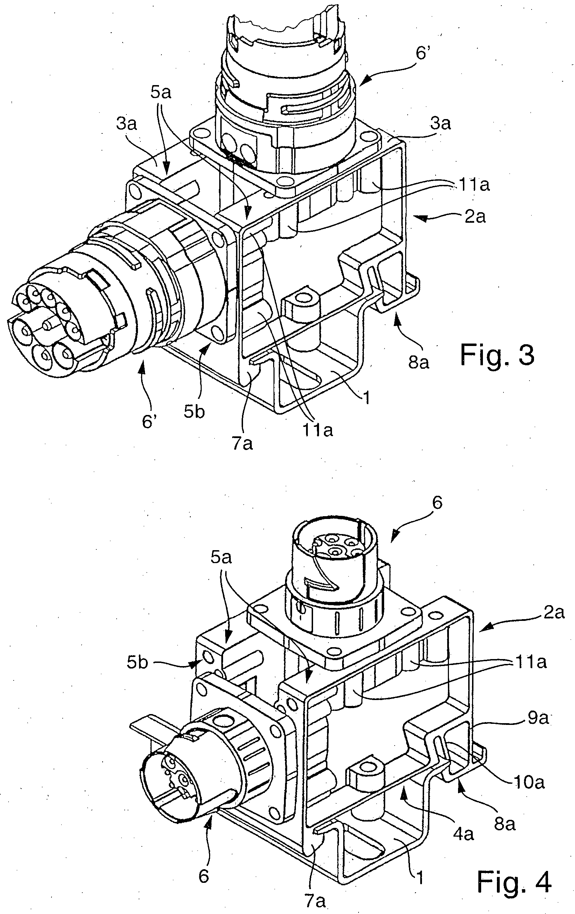

In den Fig. 3 und 4 ist ein hutförmiges Trägerprofil in Form einer Hutschiene 1 dargestellt, die bei Schaltschränken im Maschinen- und Anlagenbau eingesetzt wird, um darauf elektrische und elektromechanische Funktionskomponenten, die die Energieversorgung, Steuerung und Überwachung von Maschinen und Anlagen betreffen, fixieren zu können. Für die Energieversorgung wie auch für die elektronische Datenverbindung entsprechender Funktionskomponenten innerhalb eines Schaltschrankes werden auch elektrische Steckverbindungen eingesetzt, die Rundstecker 6, 6' umfassen. Die Rundstecker 6, 6' sind mehrpolige Rundstecker, die nach Industrienormen wie DIN oder ISO oder ähnlichen Normen einheitlich gestaltet und hergestellt sind. Um derartige Rundstecker 6, 6' platzsparend und exakt im Bereich entsprechender Funktionskomponenten innerhalb eines Schaltschrankes positionieren zu können, ist der erfindungsgemäß Adapter 2a vorgesehen, der nachfolgend anhand der Fig. 3, 4, 9 bis 12 beschrieben wird. Es ist ein Ausführungsform von erfindungsgemäßen Adapter, 2a vorgesehen, die für die Befestigung mehrpoliger Rundstecker und für die Positionierung dieser Rundstecker auf einer entsprechenden Hutschiene 1 eingesetzt wird.

Die Hutschiene 1 besteht aus Metall, vorzugsweise aus einem Stahlblech, und ist an einer Montageplattform des Schaltschrankes oder auf einer Modulträgerplatte befestigt. Der Adapter 2a wird mittels seiner Grundfläche 4a auf diese Hutschiene 1 aufgerastet. Hierzu weist der Adapter 2a eine erste Rastprofilierung in Form einer sich über die gesamte Breite des Adapters 2a erstreckenden, formstabilen Sicherungsnase 7a auf. Diese Sicherungsnase 7a untergreift einen seitlich abragenden Hutschenkel der Hutschiene 1. Ein gegenüberliegender seitlicher Hutschenkel der Hutschiene 1 wird in montiertem Zustand des Adapters 2a von zwei elastisch nachgiebigen Rastnasen 8a umgeben, die in der gleichen Ebene wie die Sicherungsnase 7a angeordnet sind. Die beiden Rastnasen 8a stellen einen Verbindungssteg zwischen zwei geringfügig elastisch nachgiebigen, schmalen Stützschenkeln 9a, 10a dar, deren Elastizität ausreicht, um die Rastnase 8a in ihrer Rastebene elastisch zwischen einer vorderen, den Hutschenkel hintergreifenden Raststellung und einer hinteren, den Hutschenkel freigebenden Löseposition verlagern zu können. Die beiden elastisch nachgiebigen Schenkel 9a, 10a bilden für die Rastnase 8a eine Parallelogrammführung, die eine Verlagerung etwa in der Rastebene und damit in der Ebene der Sicherungsnase 7a ermöglichen. Die als erste Funktionsfläche dienende Grundfläche 4a weist zudem Durchtritte 12a für Schraubelemente auf, um eine axiale Sicherung des Adapters 2a ohne Hutschiene 1 direkt auf der Montageplattform des Schaltschrankes, auf der Modulträgerplatte oder einem anderen Trägerbauteil erzielen zu können. Der Adapter 2a ist auf der Hutschiene in aufgerastetem Zustand in Axialrichtung kraftschlüssig gehalten.

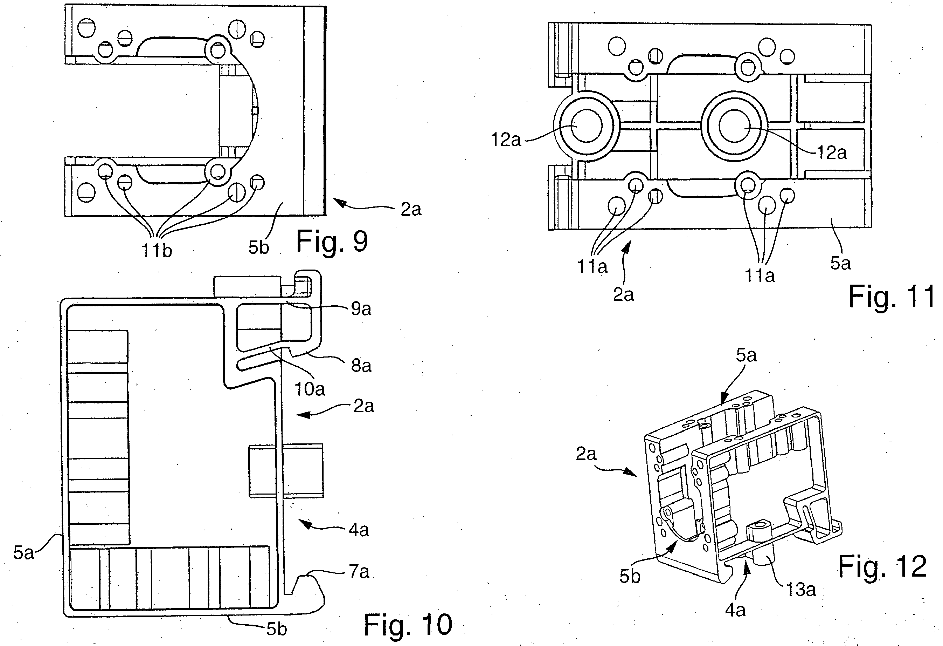

Der Adapter 2a weist im Bereich der Grundfläche 4a jeweils Befestigungsaufnahmen 13a auf, mittels derer der Adapter 2a direkt auf der Montageplattform des Schaltschrankes, auf einer Modulträgerplatte oder einem anderen Trägerbauteil befestigt werden kann. Dabei sind die Befestigungsaufnahmen 13a derart gestaltet, dass Befestigungsschrauben von einer Rückseite der Montageplattform, der Modulträgerplatte oder des anderen Trägerbauteiles her hindurchgeführt und in die Befestigungsaufnahmen 13a eingeschraubt werden können. Die Befestigungsschrauben schneiden sich dabei ihr Gewinde in den Befestigungsaufnahmen 13a selbst. Die entsprechenden Befestigungsaufnahmen 13a für die Adapter 2a sind anhand der Fig. 12 erkennbar.

Der Adapter 2a ist aus Kunststoff als einstückiges Bauteil hergestellt. Neben der Grundfläche 4a weist Adapter 2a mehrere weitere Funktionsfläche 5, 5a, 5b auf, die mit Haltemitteln zur Befestigung eines Gehäuses eines mehrpoligen Rundsteckers 6, 6' versehen ist. Die Seitenschenkel 3a des Adapters 2a sind mit Rippenversteifungen versehen. Im Bereich der Funktionsflächen 5a und 5b sind zudem Aufnahmelöcher 11a vorgesehen, die Teile der Haltemittel zur Befestigung der Rundste-ckergehäuse bilden. Die Aufnahmelöcher sind für das Einschrauben von Befestigungsschrauben vorgesehen, die durch entsprechende Bohrun-gen von viereckigen Befestigungsflanschen des jeweiligen Rundsteckergehäuses hindurchgeführt sind. Der Abstand der Seitenschenkel 3a zueinander ist so bemessen, dass die viereckigen Befestigungsflansche der Rundsteckergehäuse flächig auf die Vorderseite der Seitenschenkel 3a und damit auf die Funktionsfläche 5a aufgesetzt werden können. Zu-dem sind die verschiedenen Aufnahmelöcher 11a, die einstückig in entsprechenden Materialverdickungen der Seitenschenkel 3a vorgesehen sind, derart positioniert, dass sie komplementär zu wenigstens zwei un-terschiedlichen Rundsteckergrößen 6, 6' und deren korrespondierenden Gehäuseflanschen positioniert sind. Wie anhand der Fig. 3 und 4 erkennbar ist, fluchten nach dem Aufsetzen des Rundsteckers 6, 6' sowohl die Durchtritte des Befestigungsflansches des kleinen Rundsteckers 6 mit entsprechenden Aufnahmelöchern 11a des Adapters 2a als auch die Durchtritte des Befestigungsflansches des großen Rundsteckers 6'. Für die Befestigung des jeweiligen Rundsteckers 6, 6' sind lediglich noch entsprechende Schrauben durch die Bohrungen des Befestigungsflan-sches hindurchzuführen und in den Aufnahmelöchern 11a festzuschrauben, um die Befestigung des entsprechenden Rundsteckergehäuses am Adapter 2a zu erzielen. Die Aufnahmelöcher 11a sind derart gestaltet, dass eine sich hineindrehende Schraube ihr Gewinde selbst schneidet. Entsprechende Kabel, die dem Rundstecker 6, 6' von der Rückseite her zugeführt sind, treten in einfacher Weise durch den Hohlraum zwischen den beiden Seitenschenkeln 3a hindurch.

Der Adapter 2a gemäß der Erfindung, nach den Fig. 3, 4 und 9 bis 12 kennzeichnet sich dadurch, dass er neben der Grundfläche 4a zwei Funktionsflächen 5a, 5b aufweist, um Rundstecker 6, 6' befestigen zu können. Der Adapter 2a weist einen mit der Grundfläche 4a versehenen Bodenabschnitt auf, mit Durchtritten 12a zur direkten axialen Fixierung des Adapters 2a auf einem Trägerbauteil versehen ist, wie zuvor bereits beschrieben wurde. Von dem Bodenabschnitt aus ragen zwei Seitenschenkel 3a rechtwinklig ab, die jeweils eine Viereckform aufweisen. Die Seitenschenkel 3a defi-nieren zwei ebene Funktionsflächen 5a und 5b. Dabei ist eine der Vorderseite zugewandte Funktionsfläche 5b rechtwinklig und damit in einem Winkel von 90° zur Grundfläche 4a - in Umfangsrichtung des Adapters 2a gesehen - ausgerichtet. Die weitere Funktionsfläche 5a ist gegenüberliegend zu der Grundfläche 4a im Bereich einer Oberseite des Adapters 2a vorgesehen. Die obere Funktionsfläche 5a ist rechtwinklig zu der vorderen Funktionsfläche 5b und damit relativ zur Grundfläche 4a, die als Nullebene dient, um einen Winkel von 180° ausgerichtet. Beide Funktionsflächen 5a, 5b dienen zur Befestigung jeweils eines Gehäuses eines Rundsteckers 6, 6'. Hierzu sind in den Funktionsflächen 5a, 5b und damit auch in den Seitenschenkeln 3a entsprechende Aufnahmelö-cher 11 a vorgesehen, die komplementär zu den Durchtritten der Befestigungsflansche der Rundstecker 6, 6' ausgerichtet sind und durch entsprechende Materialverdickung in den Seitenschenkeln 3a gebildet werden. Sowohl die Positionierung der Aufnahmelöcher 11a als auch deren Anzahl in den Seitenschenkeln ist auf die Durchtritte der Befestigungsflansche der Rundsteckergehäuse abgestimmt. Zwischen den beiden Seitenschenkeln 3a ist ein nach oben, zur Vorderseite und zur Rückseite des Adapters 2a offener Hohlraum vorgesehen, der zur Kabeldurchführung dient und anhand der Fig. 3, 4 und 9, 11, 12 gut erkennbar ist.

## Patentansprüche

1. Vorrichtung zur Positionierung wenigstens eines mehrpoligen Rundstecker auf einem hutförmigen Trägerprofil, das zur Halterung von insbesondere elektromechanischen Funktionsmodulen vorgesehen ist, **dadurch gekennzeichnet, dass** ein Adapter (2a) mit mehreren, außenseitigen Funktionsflächen (4a; 5a, 5b) vorgesehen ist, wobei eine erste Funktionsfläche (4a) mit Rast-profilierungen (7a, 8a) zur Verrastung des Adapters (2a) mit dem Trägerprofil (1) versehen ist, wobei mehrere weitere, zu der ersten Funktionsfläche (4a) versetzte Funktionsflächen (5a, 5b) vorgesehen sind, die mit Haltemitteln (11a) zum lösbaren Befestigen jeweils eines Gehäuses eines Rundsteckers (6, 6') versehen sind, und wobei der Adapter (2a) wenigstens einen zu den mit den Haltemitteln versehenen außenseitigen Funktionsflächen (5a, 5b) hin offenen Hohlraum für eine Durchführung flexibler Leitungen umfasst.

2. Vorrichtung nach Anspruch 1, **dadurch gekennzeichnet, dass** der Adapter (2a) als einstückiges Kunststoffbauteil gestaltet ist.

3. Vorrichtung nach Anspruch 1 oder 2, **dadurch gekennzeichnet, dass** der Adapter (2a) rahmenförmig mit mehreren zu einem mehreckigen Körper verbundenen Rahmenprofilabschnitten (3a, ) gestaltet ist, die Kanten- und Eckbereiche des Adapters (2a) bilden.

4. Vorrichtung nach Anspruch 1, **dadurch gekennzeichnet, dass** die mit Haltemitteln (11a) zur Rundsteckergehäusebefestigung versehenen Funktionsflächen (5a, 5b) in einer gemeinsamen Umfangsrichtung aneinander und/oder an die mit den Rastprofilierungen (7a, 8a) versehene erste Funktionsfläche (4a) anschließen.

5. Vorrichtung nach Anspruch 1, **dadurch gekennzeichnet, dass** die mit den Haltemitteln (11a) versehenen Funktionsflächen (5a, 5b) zur flächigen Auflage von Befestigungsabschnitten jedes Rundsteckergehäuses eben gestaltet sind.

6. Vorrichtung nach wenigstens einem der vorhergehenden Ansprüche, **dadurch gekennzeichnet, dass** die Haltemittel als in den Rahmenprofilabschnitten vorgesehene Aufnahmelöcher (11a) gestaltet sind.

7. Vorrichtung nach Anspruch 6, **dadurch gekennzeichnet, dass** mehrere Aufnahmelöcher (11a) einer Funktionsfläche (5a, 5b) komplementär zu Schraublöchern der Befestigungsabschnitte von Rundsteckergehäusen unterschiedlicher Größe angeordnet sind.

8. Vorrichtung nach wenigstens einem der vorhergehenden Ansprüche, **dadurch gekennzeichnet, dass** die mit den Haltemitteln versehenen Funktionsflächen (5a, 5b) in Winkeln aus einem Bereich von 90° bis 180°, insbesondere in Winkeln von 90° und 180° oder 135°, relativ zu der ersten, mit den Rastprofilierungen (7a, 8a) versehenen Funktionsfläche (4a) ausgerichtet sind.

9. Vorrichtung nach Anspruch 8, **dadurch gekennzeichnet, dass** die an der ersten Funktionsfläche (4a) vorgesehenen Rastprofilierungen (7a, 8a) wenigstens eine formsteife Sicherungsnase (7a) sowie wenigstens eine elastisch nachgiebige Rastnase (8a) auf einer der Sicherungsnase (7a) gegenüberliegenden Seite umfassen.

## Claims

1. A device for positioning at least one n-terminal circular connector on a hat-shaped profiled support, which support is provided for the purpose of holding in particular electromechanical functional modules, **characterized in that** an adapter (2a) having a plurality of external functional surfaces (4a; 5a, 5b) is provided, wherein a first functional surface (4a) is provided with latch-type profiles (7a, 8a) for the purpose of snap-fastening said adapter (2a) onto said profiled support (1), wherein a plurality of further functional surfaces (5a, 5b), offset from said first functional surface (4a), are provided and equipped with retaining means (11a) for releasable attachment of in each case one housing of a circular connector (6, 6'), and wherein said adapter (2a) comprises at least one space, which is open toward the external functional surfaces (5a, 5b) equipped with the retaining means, for leading through of flexible cables.

2. The device according to claim 1, **characterized in that** said adapter (2a) is in the form of a single-piece component made of plastics material.

3. The device according to claim 1 or 2, **characterized in that** said adapter (2a) has a frame-like design having a plurality of profiled frame portions (3a) connected to form a polygonal body and forming the edge and corner regions of said adapter (2a).

4. The device according to claim 1, **characterized in that** said functional surfaces (5a, 5b), which are provided with retaining means (11a) for attachment of the circular connector housing, adjoin each other in a common peripheral direction and/or adjoin said first functional surface (4a) provided with said latch-type profiles (7a, 8a).

5. The device according to claim 1, **characterized in that** said functional surfaces (5a, 5b), which are provided with said retaining means (11 a), have a planar design for flat accommodation of attachment portions of each of said circular connector housings.

6. The device according to at least one of the preceding claims, **characterized in that** said retaining means are in the form of receiving holes (11 a) provided in the profiled frame portions.

7. The device according to claim 6, **characterized in that** a plurality of receiving holes (11 a) in a functional surface (5a, 5b) are disposed so as to be complementary to screw holes in said attachment portions of circular connector housings of different sizes.

8. The device according to at least one of the preceding claims, **characterized in that** said functional surfaces (5a, 5b), which are provided with said retaining means, are oriented at angles ranging from 90° to 180°, more particularly at angles of 90° and 180° or 135°, in relation to said first functional surface (4a) provided with said latch-type profiles (7a, 8a).

9. The device according to claim 8, **characterized in that** said latch-type profiles (7a, 8a), which are provided on said first functional surface (4a), comprise at least one dimensionally rigid locking projection (7a) and at least one resiliently yielding snap lug (8a) on the side opposite to said locking projection (7a).

## Revendications

1. Dispositif de positionnement d'au moins un connecteur annulaire multipolaire sur un profilé de support en forme de chapeau, qui est prévu pour le support de modules fonctionnels en particulier électromécaniques, **caractérisé en ce qu'**il est prévu un adaptateur (2a) avec plusieurs faces fonctionnelles extérieures (4a; 5a, 5b), dans lequel une première face fonctionnelle (4a) est munie de profilages d'encliquetage (7a, 8a) pour l'encliquetage de l'adaptateur (2a) avec le profilé de support (1), dans lequel il est prévu plusieurs autres faces fonctionnelles (5a, 5b) décalées par rapport à la première face fonctionnelle (4a), qui sont munies respectivement de moyens de retenue (11a) pour la fixation séparable d'un boîtier d'un connecteur annulaire (6, 6'), et dans lequel l'adaptateur (2a) comprend au moins un espace creux ouvert vers les faces fonctionnelles (5a, 5b) munies des moyens de retenue, pour un passage de conduites flexibles.

2. Dispositif selon la revendication 1, **caractérisé en ce que** l'adaptateur (2a) est constitué par un composant en matière plastique d'une seule pièce.

3. Dispositif selon la revendication 1 ou 2, **caractérisé en ce que** l'adaptateur (2a) est réalisé en forme de cadre avec plusieurs parties de profilé de cadre (3a) assemblées en un corps polygonal, qui forment des zones de bord et d'angle de l'adaptateur (2a).

4. Dispositif selon la revendication 1, **caractérisé en ce que** les faces fonctionnelles (5a, 5b) munies de moyens de retenue (11a) pour la fixation de boîtiers de connecteur annulaire se raccordent, dans une direction périphérique commune, l'une à l'autre et/ou à la première face fonctionnelle (4a) munie des profilages d'encliquetage (7a, 8a).

5. Dispositif selon la revendication 1, **caractérisé en ce que** les faces fonctionnelles (5a, 5b) munies des moyens de retenue (11a) ont une configuration plane pour l'appui plat de parties de fixation de chaque boîtier de connecteur annulaire.

6. Dispositif selon au moins une des revendications précédentes, **caractérisé en ce que** les moyens de retenue sont réalisés sous forme de trous de réception (11a) prévus dans les parties de profilé de cadre.

7. Dispositif selon la revendication 6, **caractérisé en ce que** plusieurs trous de réception (11a) d'une face fonctionnelle (5a, 5b) sont disposés de façon complémentaire à des trous de vis des parties de fixation de boîtier de connecteur annulaire de grandeur différente.

8. Dispositif selon au moins une des revendications précédentes, **caractérisé en ce que** les faces fonctionnelles (5a, 5b) munies des moyens de retenue sont orientées sous des angles compris dans une plage de 90° à 180°, en particulier sous des angles de 90° et 180° ou 135°, par rapport à la première face fonctionnelle (4a) munie des profilages d'encliquetage (7a, 8a).

9. Dispositif selon la revendication 8, **caractérisé en ce que** les profilages d'encliquetage (7a, 8a) prévus sur la première face fonctionnelle (4a) comprennent au moins un ergot de blocage de forme stable (7a) ainsi qu'au moins un ergot de blocage élastiquement déformable (8a) sur un côté opposé à l'ergot de blocage (7a).
